Europäisches Patentamt

European Patent Office

Office européen des brevets

(19)

(11) Veröffentlichungsnummer : **0 360 052 B1**

(12) **EUROPÄISCHE PATENTSCHRIFT**

(45) Veröffentlichungstag der Patentschrift :
29.07.92 Patentblatt 92/31

(51) Int. Cl.⁵ : **C10B 53/00**

(21) Anmeldenummer : 89116140.8

(22) Anmeldetag : 31.08.89

(54) Pyrolysereaktor zur thermischen Abfallentsorgung.

(30) Priorität : 05.09.88 DE 3830151
05.09.88 DE 3830152
05.09.88 DE 3830153

(43) Veröffentlichungstag der Anmeldung :
28.03.90 Patentblatt 90/13

(45) Bekanntmachung des Hinweises auf die
Patenterteilung :
29.07.92 Patentblatt 92/31

(84) Benannte Vertragsstaaten :
AT DE FR GB IT

(56) Entgegenhaltungen :
EP-A- 0 262 315
DE-A- 2 944 693
DE-A- 3 002 025
DE-A- 3 122 395
DE-C- 369 316
FR-A- 550 323
FR-A- 2 246 816
US-A- 1 696 731
US-A- 1 957 364
US-A- 3 794 565
US-A- 3 838 015

(73) Patentinhaber : SIEMENS
AKTIENGESELLSCHAFT
Wittelsbacherplatz 2
W-8000 München 2 (DE)

(72) Erfinder : May, Karl
Kurt-Moosdorf-Strasse 6
W-6368 Bad Vilbel (DE)
Erfinder : Herm, Hartmut
Gravenbruchstrasse 18
W-6072 Dreieich (DE)
Erfinder : Lösel, Georg, Dipl.-Ing.
Kirchenweg 3
W-8525 Uttenreuth (DE)
Erfinder : Köhler, Wolfgang, Dr.
Röckenhofer Hauptstrasse 22
W-8501 Kalchreuth (DE)
Erfinder : Engelhardt, Reiner, Dipl-Ing.
Kirchenhölzer 9
W-8521 Effeltrich (DE)

## Beschreibung

Die Erfindung bezieht sich auf einen Pyrolysereaktor für eine Anlage zur thermischen Abfallentsorgung, der den Abfall in Schwelgas und im wesentlichen nicht-flüchtigen Pyrolysereststoff umformt, mit einer Eintrittsöffnung für die Zufuhr des Abfalls in den Innenraum, mit einer Austrittsöffnung für das Schwelgas und einer Austrittsöffnung für den Pyrolysereststoff, und mit einer Heizeinrichtung für den sich im Innenraum befindlichen Abfall. Der Pyrolysereaktor ist insbesondere im Zusammenhang mit dem sogenannten Schwel-Brenn-Verfahren einsetzbar, vergleiche Publikation "Standpunkt", April 1988, Seite 15, Herausgeber: Siemens AG, Berlin und München. Er kann aber auch im Zusammenhang mit einem jeden anderen Pyrolyseverfahren eingesetzt werden.

Die Niedertemperatur-Pyrolyse von Abfall ist ein endothermer Vorgang. Die für die Reaktion benötigte Wärme wird dem Abfall über Wärmetauscher-Heizflächen zugeführt. Beispielsweise geschieht dies in einem ersten bekannten Pyrolysereaktortyp (Anlage Burgau, vergleiche EP-A-0,022,214; vergleiche Fachbuch "Pyrolyse von Abfällen" von Karl J. Thomé-Kozmiensky, EF-Verlag für Energie- und Umwelttechnik GmbH, 1985, Seiten 142 bis 151, insbesondere Schema auf Seite 148) durch die Wand einer Drehtrommel, die durch Rauchgase von außen beheizt wird (Außenbeheizung). In einem zweiten bekannten Pyrolysereaktortyp (Anlage Goldshöfe, vergleiche Fachbuch "Pyrolyse von Abfällen", supra, Seiten 97 bis 120, insbesondere Bild 2 auf Seite 101 und Text auf Seite 103) erfolgt die Wärmeübertragung an das Schwelgut durch Rohre, die von innen mit Rauchgas beheizt werden und die in die Drehtrommel eingezogen sind (Innenbeheizung). Das Rauchgas für die Beheizung entsteht durch Verbrennung des Schwelgases außerhalb der Trommel. In beiden Typen wird von einer indirekten Wärmeübertragung oder Beheizung Gebrauch gemacht.

Die beiden bekannten Pyrolysereaktortypen haben den Nachteil, daß durch die Wärmeübertragung durch die Trennwände (Außenwand bzw. Innenrohre) eine große ("treibende") Temperaturdifferenz für den Wärmetransport erforderlich ist. Das Material muß demzufolge für hohe Temperaturen ausgelegt sein. Die indirekte Beheizung mit Rauchgasen, die bekanntlich einen hohen Chloranteil besitzen können, verstärkt mit erhöhter Temperatur der wärmeübertragenden Wände das Problem der Hochtemperatur-Chlor-Korrosion.

Um dem letztgenannten Problem der Chlor-Korrosion zu begegnen, ist bei einem dritten Pyrolysereaktortyp, der für den Einsatz beim Schwel-Brenn-Verfahren vorgeschlagen wurde (DE-A-38 15 187 = VPA 88 P 3190 DE), eine Beheizung der Innenrohre durch chlorfreie Gase, insbesondere durch heiße Luft, vorgesehen. Der finanzielle Aufwand bei der Bereitstellung dieser chlorfreien Gase als Wärmeträger und der konstruktive Aufwand für die Beheizung selbst (Verbindungsleitungen, Gebläse, Wärmetauscher) sind jedoch beträchtlich.

Die vorliegende Erfindung stützt sich auch auf folgende Überlegungen: Bei der Pyrolyse des Abfalls im Pyrolysereaktor, der üblicherweise als drehendes Schwelrohr ausgebildet ist, wird der Abfall zunächst auf 100° C erwärmt. Dann beginnt die Verdampfung des im Abfall enthaltenen Wassers. Erst anschließend erfolgt durch weitere Erhitzung des getrockneten Gutes die Zersetzung in Gase (Schwelgas) und ausgegaste Rückstände (Pyrolysereststoff). Die Beobachtung zeigt, daß ein großer Teil der für den gesamten Pyrolysevorgang notwendigen Wärme bereits schon für die Verdampfung des im Abfall enthaltenen Wassers benötigt wird. Dieser Verdampfungsvorgang beginnt an der Abfall-Eintrittsöffnung und erstreckt sich üblicherweise bis über die Mitte der Schweltrommel. Der dabei entstehende Wasserdampf füllt den vorderen Trommelraum, also den Abfall-Eingangsteil, strömt zur Austrittsöffnung und mischt sich auf dem Weg dorthin mit dem Schwelgas, das aus den organischen Bestandteilen des trockenen Abfalls im hinteren Trommelraum entsteht. Würde man das Schwelgut alleine direkt durch eine Flamme beheizen, so würde gegenüber der herkömmlichen indirekten Beheizung die Qualität des erzeugten Schwelgases durch den Mischungseffekt verschlechtert. Der Heizwert kann von 11000 kJ/Nm³ Schwelgas auf 7000 kJ/Nm³ absinken. Dies führt zu schlechteren Zündeigenschaften, einem schlechteren Brennverhalten sowie zu größeren Volumenströmen in der Schwelgasleitung. Darüber hinaus erfordert bei alleiniger direkter Beheizung die große Wärmemenge, die im Eingangsteil der Schweltrommel für die Verdampfung benötigt wird, in Trommellängsrichtung einen starken Wärmetransport. Dieser müßte entweder durch zirkulierende Rauchgase oder durch eine besonders langgestreckte Flamme sichergestellt werden. Die bisherigen Abmessungen üblicher Schweltrommeln (z. B. 25 m Länge und 3,5 m Durchmesser) sind aber für einen solchen Wärmetransport ungeeignet.

Aus der US-A- 3 838 015 ist ein Pyrolysereaktor bekannt. Dieser weist zum Beheizen einen Brenner auf, der mit einem externen Brennstoff versorgt wird. Zur Förderung der Verbrennung wird dem Brenner Luft zugeführt. Nach einer Anlaufzeit entzündet sich das inzwischen im Pyrolysereaktor gebildete Schwelgas. Der Brenner benötigt dann keinen externen Brennstoff mehr. Es wird nur noch Luft in den Pyrolysereaktor zur Unterhaltung der Verbrennung eingeleitet.

Die Verbrennung des Schwelgases erfolgt dabei in ungeordneter Weise. Im Pyrolysereaktor bildet sich keine starke gerichtete Strömung aus. Vielmehr ist der Pyrolysereaktor, wenn es zur Zündung des Schwelgases durch den Brenner kommt, weitgehend homogen mit Schwelgas angefüllt. Die Flamme erfüllt dann den gesamten Innenraum des Pyrolysereaktors und steht dabei in Kontakt mit den Innenwänden des Pyrolysereaktors. Diese können dadurch beschädigt werden.

Außerdem ist bei einer weitgehend homogenen Verteilung des Schwelgases eine relativ hohe Konzentration des Schwelgases erforderlich, um eine Zündung möglich zu machen. Dadurch, daß aus einem Pyrolysereaktor ständig Schwelgas abgezogen wird, ist die Zündung erst spät oder sogar überhaupt nich möglich. Es ist daher über einen großen Zeitraum die Zufuhr des externen Brennstoffes notwendig.

Der Erfindung lag die Aufgabe zugrunde, einen Pyrolysereaktor der eingangs genannten Art so auszugestalten, daß der finanzielle Aufwand für Herstellung und Betrieb gering gehalten wird.

Diese Aufgabe wird gemäß der Erfindung dadurch gelöst, daß die Heizeinrichtung einen Brenner umfaßt, der nach Art eines Injektorbrenners aufgebaut ist oder als Mehrflammenbrenner ausgebildet ist und der mit dem Schwelgas und mit Luft speisbar ist und dessen Flamme im Innenraum gelegen ist und daß der Brenner mindestens eine mit dem Innenraum in Verbindung stehende Eintrittsöffnung für das Schwelgas aufweist.

Beim Pyrolysereaktor gemäß der Erfindung wird von einer "direkten Beheizung" Gebrauch gemacht. Das Schwelgut (Abfall) wird dabei durch eine im Pyrolysereaktor liegende Flamme, deren Brennstoff das Schwelgas selbst ist, erwärmt und vergast. Der Brenner wird einerseits mit einem Teil des Schwelgases und andererseits von außen mit Luft gespeist. Er ist so angeordnet, daß im Betrieb seine Flamme etwa axial im Innenraum gelegen ist. Speziell ist der Brenner nach Art eines Injektorbrenners aufgebaut. Das bedeutet, daß durch die Zufuhr der Luft das Schwelgas in den Brenner eingesaugt wird. Dort bildet sich ein brennbares Gemisch, das nach Zündung mittels eines Zündbrenners eine stabile, kompakte Flamme erzeugt. Eine solche Flamme ist groß genug für eine ausreichende Erwärmung des Pyrolysereaktors und berührt dabei nicht die Innenwände des Pyrolysereaktors. Dieser kann daher kostengünstig erstellt sein. Die Betriebskosten zur Bereitstellung der erforderlichen Wärmeenergie sind vergleichsweise gering, da der Zündbrenner nur relativ kurz in Betrieb zu sein braucht.

Der gesamte Pyrolysevorgang, der sich im Innenraum des Pyrolysereaktors abspielt, ist, wie bei den bekannten Pyrolysereaktortypen, ein stark unterstöchiometrischer Vorgang.

Bei der hier vorgesehenen homogenen Verbrennung mit Hilfe des Brenners (bei "homogener" Verbrennung erfolgt eine Verbrennung Gas mit Gas) müssen die Reaktionspartner Luft und Schwelgas im richtigen Verhältnis gemischt sein. Bei genügend großer Aktivierungsenergie verläuft die Reaktion selbsttätig. Bei einem solchen Vorgang mit Flammenbildung ist es unerheblich, ob Gas in eine Luftatmosphäre eintritt oder umgekehrt - wie hier - Luft in eine Schwelgasatmosphäre eingebracht wird.

Die Vorteile der hier angesprochenen "direkten Beheizung" liegen nicht nur in der vergleichsweise geringen Wärmebelastung der Materialien des Pyrolysereaktors. Die Erfindung ermöglicht darüber hinaus einen recht einfachen konstruktiven Aufbau. Sie ergibt auch einen einfachen und dadurch vergleichsweise billigen Verfahrensablauf, da Kosten für den Betrieb eines Gebläses, zum Beispiel für ein Heizluftgebläse, entfallen. Im Vergleich zu einem Pyrolysereaktor mit Innenbeheizung würden also beispielsweise die Innenberohrung der Trommel, die Heizgasleitungen, das heißt die Heißgas- und Abgasleitungen, die Transportgebläse für die Heizgase sowie die nötigen Absperrarmaturen und einige problematische rauchgasseitige Dichtungen bei der Trommel entfallen. Auch ein Wärmetauscher zur Bereitstellung von chlorarmem Heizgas würde nicht benötigt. Für eine Pyrolysetrommel mit Außenbeheizung gilt ähnliches.

Dadurch, daß der Brenner nach Art eines Injektorbrenners aufgebaut ist, wird durch den Luftstrom der zugeführten Luft direkt aus dem Pyrolysereaktor Schwelgas in den Brenner eingesaugt. Damit wird der Vorteil erzielt, daß zum Zuführen des Brennstoffes Schwelgas besondere Fördereinrichtungen wie Leitungen oder sogar Pumpen nicht erforderlich sind.

Bevorzugte Ausführungsformen und Weiterbildungen der Erfindung sind in den Unteransprüchen beschrieben.

Beispielsweise weist die Heizeinrichtung mehrere Brenner auf, die mit Luft und mit dem Schwelgas aus dem Innenraum speisbar sind und deren Flammen im Innenraum gelegen sind, wobei die Luftzufuhr mindestens eines Brenners einstellbar ist.

Beispielsweise umfaßt die Heizeinrichtung eine Heizvorrichtung für den Abfall-Eingangsteil und einen Brenner für den Abfall-Ausgangsteil, wobei der Brenner mit dem Schwelgas speisbar ist und im Betrieb eine im Innenraum gelegene Flamme aufweist.

Die Austrittsöffnung des Pyrolysereaktors für das Schwelgas kann direkt und die Austrittsöffnung für den Pyrolysereststoff kann über eine Zerkleinerungseinrichtung mit einer Hochtemperaturbrennkammer verbunden sein. Die beiden Austrittsöffnungen für Schwelgas und Pyrolysereststoff sind beispielsweise durch eine gemeinsame Öffnung gebildet. Im Bereich dieser gemeinsamen Öffnung kann der Brenner ortsfest gehalten sein. Falls der Pyrolysereaktor als drehbare Trommel ausgebildet ist, sind beispielsweise die Austrittsöffnung für das Schwelgas am einen Ende und die Austrittsöffnung für den Pyrolysereststoff am anderen Ende der Trommel angeordnet. Die Eintrittsöffnung und/oder eine Austrittsöffnung können auf der Hauptachse der Trommel angeordnet sein. Diese Hauptachse der Trommel ist beispielsweise bezüglich der Horizontalen geneigt. Der Brenner kann im Pyrolysereaktor von einem zentral angeordneten Rohr getragen sein.

Bei einer bevorzugten Ausführungsform umfaßt der Pyrolysereaktor eine außen isolierte, drehbare Trommel (= Drehrohr), die auf ihrer Innenseite mit festen schaufelartigen Vorrichtungen bestückt sein kann. Diese Vorrichtungen dienen dazu, den Abfall (Pyrolysegut) durch die Drehung der Trommel umzuwälzen und zu durchmischen. Am einen Ende der Trommel, das heißt an der Eintrittsöffnung, wird der Abfall (Pyrolysegut, Schwelgut) durch eine Stopfschnecke in Rohrlängsachse aufgegeben. Am entgegengesetzten Ende, das heißt an den Austrittsöffnungen für Schwelgas und Pyrolysereststoff, die auch durch eine gemeinsame Öffnung gebildet sein können, werden das Schwelgas und der Pyrolysereststoff abgezogen. Im zentralen Bereich dieses Abzugsendes der Drehtrommel befinden sich ein Zündbrenner oder ein dauernd brennender Pilotbrenner, ein Anfahrbrenner sowie der erwähnte Schwelgas-Brenner. Letzterer kann insbesondere als Injektorbrenner ausgebildet sein; bei geeigneter konstruktiver Ausgestaltung kann er auch als Anfahrbrenner verwendet werden, dem dann von außen Brennstoff zugeführt werden muß. Die genannten Brenner sind mit ihren Mündungen in der Schweltrommel angeordnet. Schwelgas-und Anfahrbrenner oder aber Pilot- und Anfahrbrenner können auch jeweils eine Einheit bilden.

Das Schwelgas und der Pyrolysereststoff werden nach dem Austrag aus dem Pyrolysereaktor getrennt. Bevorzugt werden das Schwelgas und ein Feinanteil des Pyrolysereststoffes direkt, der Grobanteil des Pyrolysereststoffes dagegen nach Aufarbeitung in einer geeigneten Einrichtung der Verbrennung in einer Hochtemperatur-Brennkammer zugeführt, wie im Stand der Technik beim erwähnten Schwel-Brenn-Verfahren üblich.

Eine besonders vorteilhafte Ausgestaltung besteht darin, daß im Pyrolysereaktor Energiezufuhr und Vermahlung integriert sind. Hierzu kann noch in vorteilhafter Weiterbildung eine Trennung des Pyrolysefeststoffes in verschiedene Fraktionen, insbesondere durch Siebung, treten.

Ein Pyrolysereaktor nach diesen Gesichtspunkten ergibt eine verhältnismäßig kompakte Konstruktion. Es läßt sich in ihm eine relativ einfache Trommel einsetzen, bei der im Innenraum keine Heizrohre mit den damit unvermeidlichen Wärme-Übergangsflächen erforderlich sind. Die Konstruktion ist verhältnismäßig einfach und daher preiswert, und es lassen sich lange Standzeiten erzielen.

Insbesondere ist vorgesehen, daß die Heizvorrichtung am Eingangsteil eine Auskleidung umfaßt, die durch ein Wärmeträgermedium heizbar ist. Der Eingangsteil dem Pyrolysereaktors (Schweltrommel) ist also mit einer Innenauskleidung versehen, über die Wärme zugeführt wird, um das im Abfall enthaltene Wasser zu verdampfen. Ein geeignetes Wärmetransportmedium ist z. B. Thermoöl, Heißwasser, Sattdampf oder ein Dampf-Wassergemisch. Die erforderliche Wärme kann aus dem Abhitzesystem oder aus der Dampfturbine der zugehörigen Anlage zur thermischen Abfallentsorgung ausgeschleust werden, wobei davon ausgegangen wird, daß ein solches Abhitzesystem bzw. eine solche Dampfturbine üblicherweise mit der Schwelanlage gekoppelt ist.

Die hier geforderte Kombination von direkter und indirekter Beheizung des Pyrolysereaktors, der insbesondere in üblicher Weise als Schweltrommel ausgeführt sein kann, ermöglicht gegenüber alleiniger direkter oder alleiniger indirekter Beheizung eine verbesserte Prozeßführung. Die indirekte Beheizung am Eingangsteil des Pyrolysereaktors hat bei dieser Kombination gegenüber der alleinigen direkten Beheizung den Vorteil, daß weniger Wärme über die Direktbeheizung mit der Flamme einzubringen ist, wodurch der Heizwert des Schwelgases verbessert wird und die Flammenlänge des Brenners den Erfordernissen besser entspricht.

Gemäß einer besonders vorteilhaften Ausführungsform umfaßt die Auskleidung einen Rohrkorb, der von dem Wärmeträgermedium durchströmt werden kann. Eine solche Konstruktion hat den Vorteil, daß nur wenige und relativ kleine Dichtungen benötigt werden.

Gemäß einer weiteren Ausbildung ist vorgesehen, daß eine Vorrichtung zum Absaugen des im Abfall-Eingangsteils entstehenden Wasserdampfs angeordnet ist. Über diese Vorrichtung kann ein Teil des Wasserdampfs aus dem Eintrittsbereich des Abfalls im Pyrolysereaktor abgesaugt werden und z. B. getrennt vom Schwelgas der üblicherweise nachgeschalteten Hochtemperatur-Brennkammer in geeigneter Weise zugeführt werden. Durch die Absaugung wird der Heizwert des Schwelgases erhöht; auch wird das Zünd-, Brenn- und Regelverhalten des erwähnten Schwelgas-Brenners am Abfall-Ausgangsteil und des Brenners in der üblicherweise nachgeschalteten Schwelgas-Verbrennungseinrichtung (Hochtemperatur-Brennkammer) verbessert.

Ausführungsbeispiele der Erfindung werden im folgenden anhand von Figuren näher erläutert:

Figur 1 zeigt einen Pyrolysereaktor, der in einer Anlage zur thermischen Abfallentsorgung nach dem Schwel-Brenn-Verfahren eingesetzt wird.

Figur 2 zeigt einen Pyrolysereaktor mit nachgeordnetem Austragsgehäuse, der in sich die Funktionen Verschwelen, Mahlen und Sieben vereinigt.

Fig. 3 zeigt einen Pyrolysereaktor mit kombinierter indirekter und direkter Beheizung.

Fig. 4 zeigt einen Blick in Richtung der Pfeile II-II in Fig. 1 auf ein Viertel des dort gezeigten Rohrkorbs.

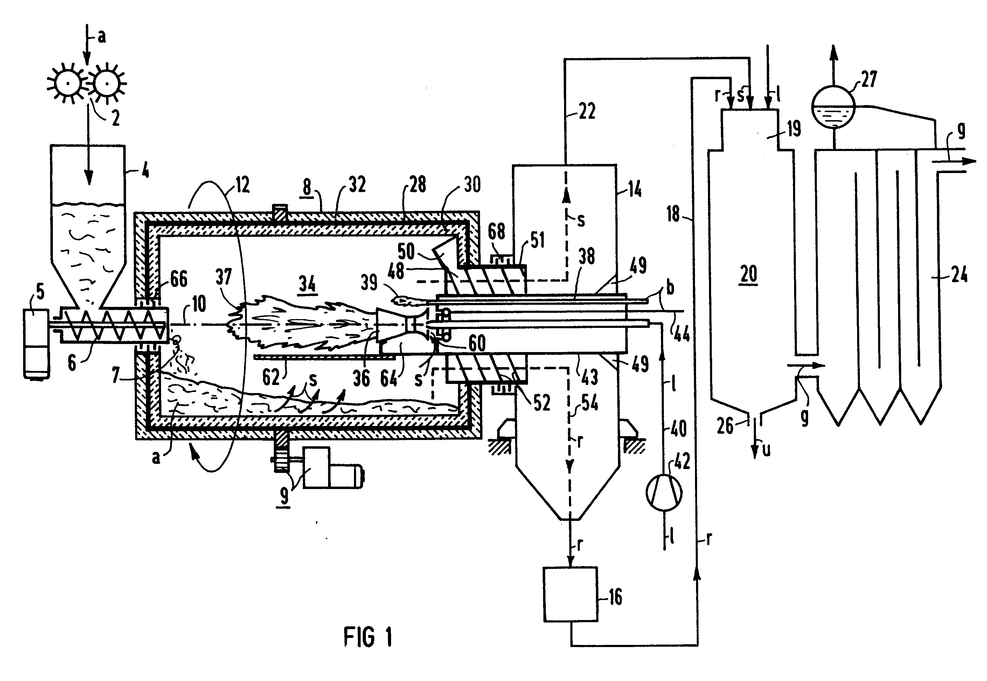

Nach der Figur 1 wird der zu verwertende Abfall a, zum Beispiel Hausmüll, in bekannter Weise über ein Mahlwerk 2, einen Füllschacht 4 und eine von einem Motor 5 angetriebene Stopfschnecke 6 über eine Eintrittsöffnung 7 in einen Pyrolysereaktor 8 eingebracht. Der Pyrolysereaktor 8 ist als zylindrische Schweltrommel ausgebildet. Er dreht sich im Betrieb zwecks Umwälzung des Abfalls a mit Hilfe eines Getriebemotors 9 um seine Hauptachse 10, was durch einen gekrümmten Pfeil 12 angedeutet ist. Der Pyrolysereaktor 8 arbeitet bei 300 bis 600° C, wird weitgehend unter Sauerstoffabschluß ("unterstöchiometrisch") betrieben und erzeugt neben flüchtigem Schwelgas s einen weitgehend festen Pyrolysereststoff r. Die Haupt- oder Längsachse 10 ist gegenüber der Horizontalen geneigt, damit der Abfall a beim Drehen in Richtung Ausgangsseite transportiert wird.

Der Reststoff r wird einem Austragsbehälter 14 zugeführt. Von dort gelangt er nach Zerkleinerung in einem Mahlwerk 16 über eine Staubleitung 18 in den Brenner 19 einer Hochtemperatur-Brennkammer 20. Das sich bei der Pyrolyse bildende Schwelgas s gelangt größtenteils über eine Schwelgasleitung 22 ebenfalls in den Brenner 19 der Hochtemperatur-Brennkammer 20. Diesem Brenner 19 der Hochtemperatur-Brennkammer 20 wird zur Verbrennung auch Luft 1 zugeführt. Die Rauchgase g aus der Hochtemperatur-Brennkammer 20 gehen in einen Abhitze-Dampferzeuger 24 und von dort über eine (nicht gezeigte) Rauchgasreinigungsanlage und einen Schornstein in die Atmosphäre. Die Hochtemperatur-Brennkammer 20 ist mit einem Abzug 26 versehen, aus dem schmelzflüssige Schlacke u abgezogen wird. Der Abhitze-Dampferzeuger 24 besitzt in bekannter Weise eine Kesseltrommel 27.

Der Pyrolysereaktor 8 besteht im wesentlichen aus einem rohrförmigen Stahlmantel 28, der innen mit einer Ausmauerung 30 und außen mit einer Außenisolierung 32 versehen ist. Die Außenisolierung 32 muß, die Ausmauerung 30 kann vorhanden sein. Die Außenisolierung 32 sorgt dafür, daß nach außen nicht allzuviel Wärme abgegeben wird. Die Ausmauerung 30 dagegen schützt die Stahlwand 28 der Drehtrommel 8 vor Hochtemperatur-Chlor-Korrosion. Sie ermöglicht es gleichzeitig, eine relativ hohe Innentemperatur zu erzielen.

Als Heizeinrichtung für den Innenraum 34 des Pyrolysereaktors 8 ist ein Brenner 36 vorgesehen. Dieser wird einerseits mit einem Teil des Schwelgases s und andererseits von außen mit Luft 1 gespeist. Er ist so angeordnet, daß im Betrieb seine Flamme 37 etwa axial im Innenraum 34 gelegen ist. Speziell ist der Brenner 36 vorliegend nach Art eines Injektorbrenners aufgebaut. Das bedeutet, daß durch die Zufuhr der Luft 1 das Schwelgas s selbst in den Brenner 36 eingesaugt wird. Dort bildet sich ein brennbares Gasgemisch, das nach Zündung mittels eines Zündbrenners 38, dessen Flamme mit 39 bezeichnet ist, oder aber eines dauernd brennenden Pilotbrenners eine stabile Flamme 37 erzeugt. Ist der Zündbrenner 38 dauernd gezündet, wirkt er als Pilotbrenner. Infolge der Anordnung des Brenners 36 entfallen die sonst üblichen Heizrohre im Innenraum 34. Die Flamme 37 kann abweichend von der Darstellung auch schräg ausgerichtet sein oder auch außerhalb der Hauptachse 10 liegen, d. h. zum Beispiel neben, über oder unter der Hauptachse 10 angeordnet sein.

Wie ersichtlich, ist in der vorliegenden Ausführungsform der Brenner 36 stirnseitig am einen Ende des trommelförmigen Pyrolysereaktors 8 angeordnet, während sich stirnseitig am anderen Ende die Eintrittsöffnung 7 für den Abfall a befindet. Weiterhin ist ersichtlich, daß sowohl der Brenner 36 als auch die Eintrittsöffnung 7 für den Abfall a auf der Hauptachse 10 der Trommel angeordnet sind. Der Brenner 36 ist an einer Luftzuleitung 40 angeschlossen, die mit einem Luftgebläse 42 verbunden ist. Im Austragsbehälter 14 ist ein vorderendseitig geschlossener, feststehender Rohrkörper 43 in Richtung der Hauptachse 10 untergebracht und befestigt. In diesem verläuft die Luftzuleitung 40. Am Rohrkörper 43 ist auch der Brenner 36 über ein Halterungsblech 64 oder eine andere Halteeinrichtung festgemacht.

Außer dem Zündbrenner 38 oder dem Pilotbrenner kann dem Schwelgas-Brenner 36 auch ein (nicht gezeigter) Anfahrbrenner zugeordnet sein. Ist der Zündbrenner 38 oder der Pilotbrenner großgenug, kann er ebenfalls als Anfahrbrenner benutzt werden. Dieser Anfahrbrenner dient dazu, beim Anfahren den Innenraum 34 des Pyrolysereaktors 8 zu erhitzen, bis ausreichend Schwelgas s entsteht, so daß eine selbsttätige Verbrennung stattfinden kann. Bis dahin muß dem Anfahrbrenner von außen Brennstoff b zugeführt werden. Der (nicht getrennt gezeigte) Anfahrbrenner kann dabei - bei geeigneter Konstruktion - in den Schwelgas-Brenner 36 integriert sein, was vorliegend gezeigt ist. Der Brenner 36 ist somit an eine Brennstoffleitung 44 angeschlossen, die in einem ringförmigen Verteiler mit düsenförmigen Öffnungen mündet. Der Brenner 36 wird durch den Verteiler beim Anfahren mit Brennstoff b gespeist, wodurch er gleichzeitig als Anfahrbrenner dient.

Für den Austritt des Schwelgases s und des Pyrolysereststoffes r ist vorliegend eine gemeinsame Austrittsöffnung 48 vorgesehen. Im Bereich dieser Austrittsöffnung 48 ist der Brenner 36 ortsfest angeordnet. Hierzu kann beispielsweise die Halterung 49 samt Rohrkörper 43 dienen. Der hier als Rohrkörper 43 bezeichnete Gegenstand kann auch einen rechteckigen oder unregelmäßigen Querschnitt besitzen.

Zum Transport des Abfalls a durch die Austragsöffnung 48 dient ein Schaufelrad 50, das am hinteren Stirnende der Trommel 8 befestigt ist und sich in ein Rohrteil 51 erstreckt. Dieses Rohrteil 51 ist innen mit schraubenförmigen Zügen oder Schaufeln 52 zur Weiterleitung des Abfalls a in Austragsbehälter 14 versehen. Das Rohrteil 51 dreht sich mit der Trommel 8 mit, ebenso wie die Züge 52. Dadurch gelangt der Abfall a auf dem Weg 54 in den Austragsbehälter 14.

Der Brenner 36 ist im feststehenden Rohrteil 43 auswechselbar untergebracht. Er kann gegen einen Anfahrbrenner zu Beginn des Anfahrvorgangs ausgetauscht werden.

Der Brenner 36 ist - wie erläutert - bevorzugt als Injektorbrenner ausgebildet. Er hat eine trichterförmige Gestalt und weist eine oder mehrere mit dem Innenraum 34 in Verbindung stehende Eintrittsöffnungen 60 für das Schwelgas s auf. Vorliegend ist eine einzige Ringöffnung zum Ansaugen des Schwelgases s vorhanden.

Unter Umständen kann es erforderlich sein, die Strahlung von der Flamme 37 zum Schwelgut a am Boden der Schweltrommel 8 zu reduzieren. Dies wird vorliegend durch einen Schutzschirm 62 erreicht, der im Innenraum 34 angeordnet ist. Er ist hier im Innenraum 34 ortsfest angebracht. Dies kann - wie gezeigt - durch eine Befestigung 64 am Brenner 36 geschehen. Diese dient hier gleichzeitig zur Halterung des Injektorbrenners 36 am Rohrkörper 43. Der Schirm 62 reduziert die Strahlung der Flamme 37 in Richtung auf das am Boden liegende Schwelgut a.

Es sind vorliegend nur wenige Dichtungen relativ kleinen Durchmessers vorgesehen; diese Ringdichtungen sind mit 66 und 68 bezeichnet. Dies ist ein erheblicher Vorteil für die Herstellung und den Betrieb.

Zur Funktion ist folgendes zu sagen: Ein gewisser Anteil des Schwelgases s wird in der Schweltrommel 8 direkt zur Erhitzung des Schwelgutes Abfall a verwendet. Im stationären Betrieb wird dabei dem Brenner 36 nur Verbrennungsluft 1 zugeführt. Zur sicheren Betriebsführung besitzt der Brenner 36 aber - wie bereits erwähnt - einen permanent brennenden Pilotbrenner geringer Wärmeleistung, z. B. den Brenner 38, der von außen mit Brennstoff b versorgt wird. Beim Anfahren arbeitet der Brenner 36 hier ausschließlich mit dem von außen zugeführten Brennstoff b. Er ist damit gleichzeitig Anfahrbrenner.

Die bei der Verbrennung in der Flamme 37 in der Schweltrommel 8 entstehende Wärme wird dem Schwelgut a zum Teil direkt, zum Teil aber indirekt - mit Zwischenspeicherung im von oben nach unten sich drehenden Wandmaterial (Ausmauerung 30) der Trommel 8 - zugeführt. Bei demjenigen Teil der Wärme, der dem Schwelgut a indirekt zugeführt wird, übernimmt die Wand 28, falls vorhanden auch die Ausmauerung 30, die Funktion eines Regenerators oder Wärmespeichers.

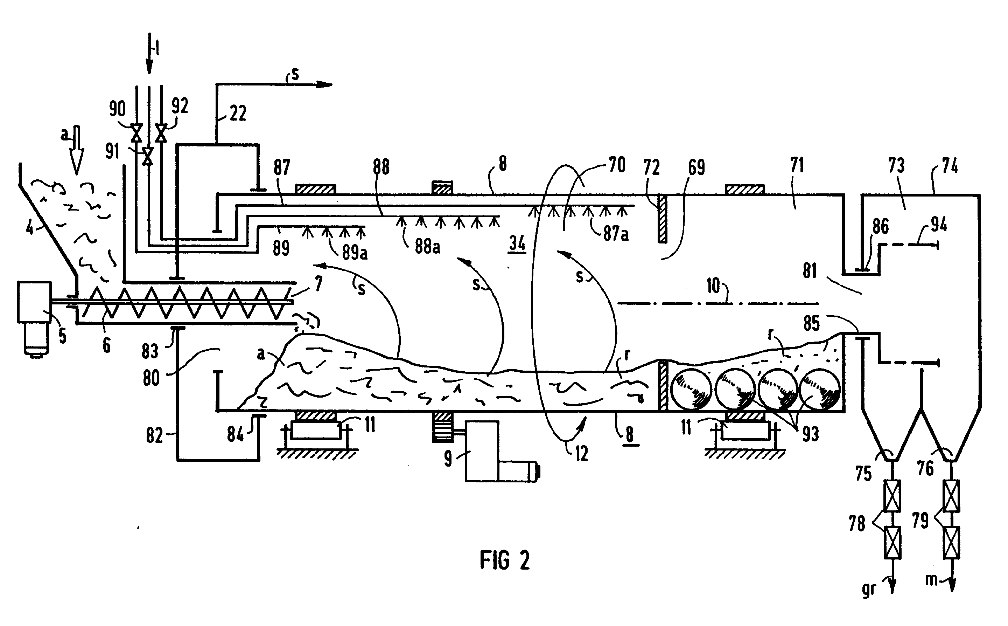

Nach der Figur 2 wird der zu verwertende Abfall a, z. B. Hausmüll, über einen Füllschacht 4 und eine von einem Motor 5 angetriebene Stopfschnecke 6 über eine Eintrittsöffnung 7 in einen Pyrolysereaktor 8 eingebracht. Der Pyrolysereaktor 8 besteht im wesentlichen aus einer zylindrischen Schweltrommel. Die Schweltrommel kann sich zwecks Umwälzung des Abfalls a mit Hilfe eines Getriebemotors 9 um ihre Hauptachse 10 drehen, was durch einen gekrümmten Pfeil 12 angedeutet ist. Der Pyrolysereaktor 8 arbeitet bei 300 bis 600° C, wird weitgehend unter Sauerstoffabschluß, d. h. unterstöchiometrisch, betrieben und erzeugt neben flüchtigem Schwelgas s auch einen festen Pyrolysereststoff r. Trommel-Lagerstationen 11 sind derart angeordnet und ausgerichtet, daß die Haupt- oder Längsachse 10 gegenüber der Horizontalen geneigt ist. Damit wird bei der Rotation der Abfall a in Richtung der rechts gelegenen Ausgangsseite transportiert. Ersichtlich ist die Schweltrommel des Pyrolysereaktors 8 als drehbares Leerrohr ohne Heizrohre ausgeführt.

Der Innenraum 34 ist in einen Verschwelungsraum 70 und einen Mahlraum 71 unterteilt. Hierzu dient eine Trennwand 72, die eine zentrale Öffnung 69 aufweist. Den beiden Räumen 70 und 71 kann sich bevorzugt ein Siebraum 73 anschließen, der durch ein feststehendes Reststoffaustragsgehäuse 74 gebildet ist. Dieses ist mit einem Abzug 75 für gemahlenen Reststoff gr und außenseitig mit einem weiteren Abzug 76 für Metalle m ausgestattet. Schieber oder Absperrungen 78 bzw. 79 dienen zum gezielten Austrag nach Wunsch.

Der gemahlene Reststoff gr gelangt bevorzugt über eine (nicht gezeigte) Staubleitung in den Brenner einer Hochtemperatur-Brennkammer. Auch das sich bei der Pyrolyse bildende Schwelgas s gelangt größtenteils über eine Schwelgasleitung in den Brenner dieser Hochtemperatur-Brennkammer. Dem besagten Brenner kann zur Verbrennung zusätzlich auch Luft zugeführt werden. Die Rauchgase aus der Hochtemperatur-Brennkammer gehen sodann in einen Abhitze-Dampferzeuger und von dort über eine Rauchgasreinigungsanlage und einen Schornstein in die Atomsphäre. Beim hier zugrundegelegten Schwel-Brenn-Verfahren ist die Hochtemperatur-Brennkammer mit einem Abzug versehen, aus dem schmelzflüssige Schlacke abgezogen wird.

Ersichtlich ist vorliegend die drehbare Trommel 8 so ausgebildet, daß die Austrittsöffnung 80 für das Schwelgas s am Eintrittsende des Abfalls a und die Austrittsöffnung 81 für den Pyrolysereststoff r am anderen Ende der Trommel 8 angeordnet ist. Die Austrittsöffnungen 80, 81 sind dabei im zentralen Bereich angeordnet. Die Austrittsöffnung 80 befindet sich in einem Schwelgas-Austrittsgehäuse 82, das feststehend angeordnet ist und mit zwei ringförmigen Gleit-Dichtungen 83, 84 ausgestattet ist. An dieses Gehäuse 82 schließt eine Schwelgas-Abzugsleitung 22 an. In das zylindrische Gehäuse 82 führt zentral die Stopfschnecke 6. Die Austrittsöffnung 81 ist durch ein zentrales rohrförmiges Endstück 85 an der Trommel 8 gebildet. Dieses Endstück 85 ragt in das Reststoff-Austragsgehäuse 74 ein und ist mittels einer Ringdichtung 86 gegen die Atmosphäre abgedichtet.

Die Energiezufuhr für den Pyrolyseprozeß geschieht durch Teilverbrennung des in der Trommel 8 entstehenden Schwelgases s im Schwelraum 70. Dies ist gewährleistet durch die Zufuhr von vorgewärmter oder kalter Luft l über stationär angeordnete Rohre 87, 88, 89, die an ihrem Ende jeweils mit mehreren Löchern oder Düsen 87a, 88a bzw. 89a versehen sind, die als Brenner fungieren. Speziell können Lochrohre verwendet werden, in deren Öffnungen Brenndüsen eingesetzt sind. In den Luftzuleitungen zu den Rohren 87, 88, 89 liegen steuerbare (Drossel-)Ventile 90, 91 bzw. 92, über die jeweils die Luftzufuhr zu den Löchern oder Düsen 87a, 88a bzw. 89a einstellbar oder regelbar ist. Beim Drehen des Schwelrohres 8 befinden sich die Lochrohre 87, 88, 89, die insbesondere von unterschiedlicher Länge sind, immer in gestaffelter, paralleler Anordnung am oberen Teil des Innenraums 34, und zwar parallel zur Innenwand. Durch die Zufuhr der Luft 1 über die gelochten, feststehenden Rohre 87, 88, 89 unterschiedlicher Länge und die Steuerung mittels der Ventile 90, 91, 92 ist ein zonenweises Dosieren innerhalb der Schwelzone 70 möglich. Die zugeführte Luft 1 kann dabei jeweils bedarfsabhängig gesteuert werden. Somit kann auch die Energiezufuhr zur Verschwelung des Abfalls a bedarfsabhängig, d. h. an die Abfall-Zusammensetzung angepaßt, in den einzelnen Schwelzonen gesteuert werden. Denn im Bereich der Löcher oder Düsen 87a, 88a, 89a entstehen kleine Flammen, die zu einer direkten Aufheizung des darunter befindlichen Abfalls a führen. Zum Zünden können (nicht gezeigte) Startzünder vorgesehen sein.

Es ist also festzuhalten, daß das brennbare Schwelgas s teilweise im Innenraum 70 verbrannt wird, wobei es Energie für den Pyrolyseprozeß abgibt. Das nicht verbrannte Schwelgas s wird nach links durch das Austrittsgehäuse 82 zu dem Abzug 22 und von dort zur Hochtemperatur-Brennkammer geführt. Der Austrag des Schwelgases s erfolgt hier also im Gegenstrom zum aufgegebenen Abfall a.

Beim Drehen des Schwelrohres 8 wird der Pyrolysereststoff r vom Schwelraum 70 über die zentrale Öffnung 69 in der Trennwand 72 in den Mahlraum 71 übergeführt. In diesem Mahlraum 71 wird der pyrolysierte Abfall r mit Hilfe von Mahlkörpern 70 beim Drehen zerkleinert. Bei diesen Mahlkörpern 93 handelt es sich insbesondere um größere Metallkugeln oder -rollen von erheblichem Gewicht, also um runde Metallkörper. Diese Mahlkörper 93 liegen unten, da die Trommel 8 - wie voranstehend erläutert - leicht geneigt ist. Der pyrolysierte Abfall r rutscht somit von alleine in Richtung Ausgang 81. Die Trennwand 72 zwischen Schwelzone 70 und Mahlzone 71 dient hier auch dazu, um einen vorgegebenen Mindest-Füllstand in der Schwelzone 70 einzuhalten.

Der Austrag des festen Pyrolysereststoffes r erfolgt über die Austragsöffnung 81 im rohrförmigen Anschlußstück 85 in Richtung auf den Siebraum 73. In diesem Raum 73 ist ein mit dem Trommelende über das Rohrstück 85 fest verbundenes, sich mitdrehendes Sieb 94 in Form eines zylindrischen Siebkörpers angeordnet. Dieses reicht nicht ganz bis zur rechten Seite des Gehäuses 74. Dadurch ist ein getrennter Austrag des gemahlenen Reststoffes gr und der Metalle m möglich.

Die Vorteile werden insbesondere darin gesehen, daß eine einfache Konstruktion der Trommel 8 vorliegt. Heizgas zur Beheizung des Abfalls a beim Pyrolysevorgang ist nicht erforderlich. Es sind nur wenige Dichtungen 83, 84, 86 an der Trommel 8 angeordnet. Die dargestellte Konstruktion erfüllt eine Multifunktion, nämlich Schwelen, Mahlen und Sieben.

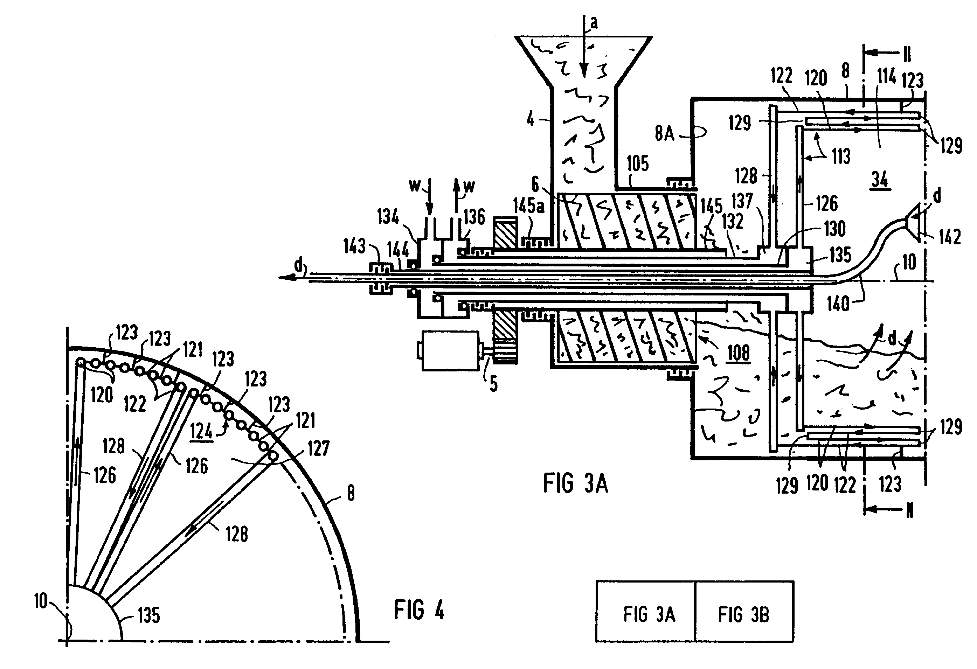

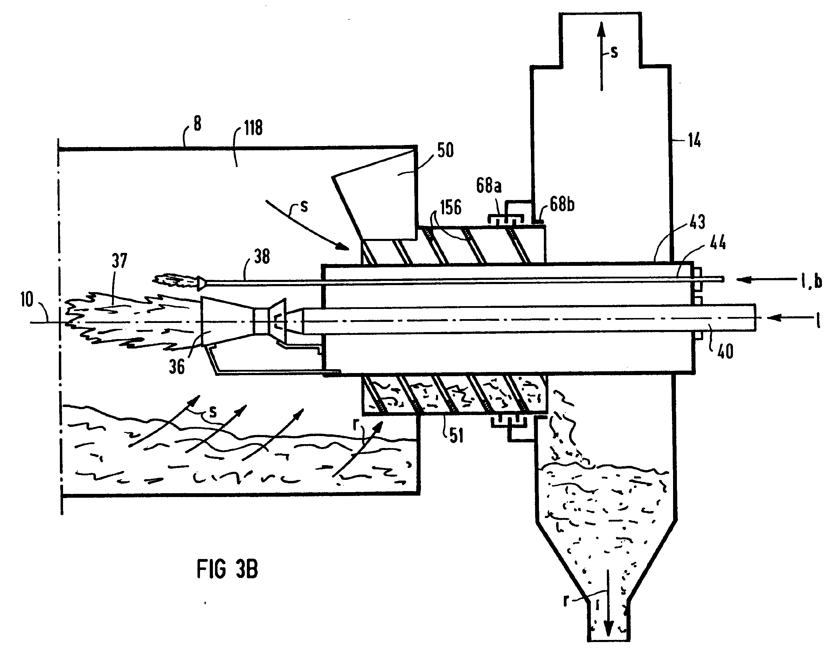

Nach Fig. 3 wird der zu verwertende Abfall a, z. B. Hausmüll, über einen Aufgabetrichter oder Füllschacht 4 sowie über eine von einem Getriebemotor 5 angetriebene, in einem angeschlossenen Gehäuse 105 befindliche Stopfschnecke 6 sowie über eine Eintrittsöffnung 108 (= offene rechte Seite des Gehäuses 105) in einen Pyrolysereaktor 8 eingebracht. Der Pyrolysereaktor 8 ist im wesentlichen als eine zylindrische Schweltrommel ausgeführt.

Die Schweltrommel kann sich zwecks Umwälzung des eingebrachten Abfalls a mit Hilfe eines (nicht gezeigten) Getriebemotors um ihre Längs- oder Hauptachse 10 drehen. Der Pyrolysereaktor 8 arbeitet bei 300 bis 600° C, wird weitgehend unter Sauerstoffabschluß, d. h. unterstöchiometrisch, betrieben und erzeugt neben Wasserdampf d und flüchtigem Schwelgas s auch einen weitgehend festen Pyrolysereststoff r. Die Hauptachse 10 ist derart ausgerichtet, daß sie gegenüber der Horizontalen leicht geneigt ist. Damit wird bei der Rotation der Abfall a in Richtung der rechts gelegenen Abfall-Ausgangsseite transportiert. Der Innenraum ist allgemein mit 34 bezeichnet.

Die gesamte Heizeinrichtung für den Pyrolysereaktor 8 umfaßt vorliegend erstens eine Heizvorrichtung 113 für die indirekte Beheizung des Abfall-Eingangsteils 114 des Innenraums 34 und zweitens einen Brenner 36 für den Abfall-Ausgangsteil 118 des Innenraums 34. Der Brenner 36 ist mit dem Schwelgas s und mit Luft 1 speisbar; seine langgestreckte Flamme 37 liegt im Betrieb im Ausgangsteil 118, und zwar etwa im Bereich der Zentralachse 10. Der Ausgangsteil 118 kann innen ausgemauert sein.

Die Heizvorrichtung 113 am Abfall-Eingangsteil 114 umfaßt eine Auskleidung dieses Eingangsteils 114 in Form einer durchgehenden Wärme-Übergangsfläche oder - wie dargestellt - in Form einer Anzahl von parallelen Rohren 120, 122 für ein hin- bzw. rückströmendes Wärmeträgermedium w. Diese Rohre 120, 122 sind in Fig. 3 auseinandergezogen dargestellt; sie sind durch Verbindungsstege 121 miteinander verbunden, z. B. verschweißt, und durch Befestigungs- oder Haltestege 123 an der Wand der Trommel des Pyrolysereaktors 8 befestigt. Infolge dieser Befestigung ist die Heizvorrichtung 113 für die indirekte Beheizung zusammen mit der Trommel des Pyrolysereaktors 8 und mit gleicher Drehzahl wie diese um die Hauptachse 10 drehbar. Die Rohre 120, 122 sind Bestandteil eines allgemein mit 124 bezeichneten Rohrkorbes (FIG 4). Geeignete Konstruktionen hierfür lassen sich aus dem Gebiet der Wärmetauscher ableiten. Der Rohrkorb 124 kann (wie gezeigt) eine ringzylindrische Gestalt haben. Bevorzugt ist er schaufelartig ausgebildet, d. h. die Rohre 120, 122 sind entweder im Innenraum 34 mit Schaufeln versehen oder dort zu Schaufeln gebogen und zusammengefaßt. Damit wird bei Drehung der Trommel 8 eine gute Umwälzung erzielt. Die schaufelförmige Gestaltung der Rohre 120, 122 selbst hat darüber hinaus den Vorteil, daß man eine relativ große wärmeübertragende Oberfläche je Meter Trommellänge erzielen kann; mit anderen Worten, die Trommel 8 kann gedrungen (kurz) ausgebildet werden.

Nach Fig. 4 umfaßt der Rohrkorb 124 außer den in Längsrichtung nahe der Außenwand liegenden Rohren 120, 122 eine erste Anzahl radial ausgerichteter erster Rohre 126 und (jeweils im Abstand 127) eine zweite Anzahl radial ausgerichteter zweiter Rohre 128, an die jeweils die Rohre 120, 122 angeschlossen sind. Endseitig sind die Rohre 120, 122 durch Verbindungsstücke 129 miteinander verbunden, z. B. mehrfach-mäanderförmig, damit die Zwischenräume 127 zwischen benachbarten Rohren 126, 128 entstehen. Die ersten Rohre 126 beinhalten im Betrieb das zuströmende Wärmeträgermedium w und sind eingangsseitig gemeinsam an ein Zuströmrohr 130 angeschlossen. Die zweiten Rohre 128 sind ausgangsseitig gemeinsam an ein Abströmrohr 132 angeschlossen. Sie beinhalten das abströmende Wärmeträgermedium w. Die Rohre 120, 122 können im Innenraum 34 des Pyrolysereaktors 8 auf verschiedene Weise verlegt sein, z. B. - wie hier gezeigt - parallel zur Hauptachse 10. Sie können aber auch kreisförmig ineinandergewickelt den Pyrolysereaktor 8 auskleiden. Es ist nach FIG 3 auch möglich, zusätzlich die eintrittsseitige Stirnwand 8A zu verkleiden. Auch können in dem Rohrkorb 124 Erhebungen oder Schaufeln - wie bereits dargelegt - zur besseren Umwälzung des Abfalls a und zur Verbesserung des Wärmetransports eingebaut werden.

Das Zuströmrohr 130 und das Abströmrohr 132 sind axial ineinander angeordnet, und zwar auf der Hauptachse 10 des Pyrolysereaktors 8. Die konzentrischen Rohre 130, 132 enden links in abgedichteten Verbindungs- oder Anschlußstücken 134 bzw. 136, die stationär oder ortsfest gehalten werden. Die Rohre 130, 132 sind rechts an Anschlußstücke 135 bzw. 137 angeschlossen, die wieder an die Rohre 126 bzw. 128 angeschlossen sind. In das Verbindungsstück 134 kann das Wärmeträgermedium w, beispielsweise Thermoöl, Heißwasser, Sattdampf oder Dampf-Wassergemisch, eingeführt werden. Es gelangt von hier über das Zuströmrohr 130, das Anschlußstück 135, die spinnenförmig davon ausgehenden ersten Verteilerrohre 126 und die Längsrohre 120 in die Verbindungsstücke 129; von dort gelangt es, gegebenenfalls im Zick-Zack-Weg, zurück über die Längsrohre 122, die spinnenförmig angeordneten Verteilerrohre 128, das Anschlußstück 137 und das außen angeordnete Abströmrohr 132 in das Anschlußstück 136. Von dort strömt es im Kreislauf in ein (nicht gezeigtes) Wärmetauschersystem. Beim Drehen des Pyrolysereaktors 8 drehen sich sämtliche Rohre 120, 122, 130, 132 um die Längsachse 10.

Zum Absaugen des im Abfall-Eingangsteil 114 infolge der Hitze entstehenden Wasserdampfes d ist eine Vorrichtung vorgesehen, die vorliegend ein Wasserdampf-Absaugrohr 140 umfaßt. Dieses ist zentral in den beiden Rohren 130, 132 angeordnet und reicht mit seiner Mündung in den Abfall-Eingangsteil 114. Vorzugsweise trägt es auf seinem dort befindlichen Ende einen Trichter 142. Dieser Trichter 142 dient dazu, den Wasserdampf d gerichtet vom oberen Teil des Verdampfungsraumes im Abfall-Eingangsteil 114 abzusaugen. Das Wasserdampf-Absaugrohr 140 ist an eine (nicht gezeigte) Absaugeinrichtung (z. B. Pumpe) angeschlossen. Bei einer Anlage nach dem Schwel-Brenn-Verfahren führt es dagegen direkt in die mit Unterdruck betriebene Hochtemperatur-Brennkammer. Wie sogleich deutlich wird, ist das zentrale Absaugrohr 140 vorliegend ortsfest angeordnet. Es könnte sich prinzipiell auch mit den Rohren 130, 132 mitdrehen. Die vorliegende Konstruktion hat aber den Vorteil, daß das Rohr 140 im Innenraum 34 endseitig nach oben gebogen sein kann, wie gezeigt, um den sich dort sammelnden Wasserdampf d fortlaufend und gezielt abzusaugen.

Abweichend von der Darstellung kann der im Bereich der Stirnwand 8A gezeigte Totraum ebenfalls durch Stücke der Rohre 120, 122 gefüllt sein.

Statt des Trichters 142 kann auch ein Absaugkopf gewählt werden, der den Wasserdampf d nicht punktförmig, sondern über eine größere Fläche hinweg absaugt und der so ausgebildet ist, daß wenig Staub über den Wasserdampf d in das Rohr 140 eingesaugt wird. Hierzu kann ein (nicht gezeigter) Staubabscheider im Absaugkopf vorgesehen sein, bei dem der angesaugte Staub wieder in den Innenraum 34 fällt.

Die beiden Verbindungsstücke 134, 136 sind ortsfest und abgedichtet angeordnet; die linken Enden der zugeordneten Rohre 130 bzw. 132 können sich in ihnen drehen. Das feststehende Rohr 140 liegt - abgedichtet über eine Gasdichtung 143 - in einem Rohr 144, welches Rohr 144 wiederum im Rohr 130 und in den Verbindungsstücken 134, 135 liegt, und dieses Rohr 130 liegt abgedichtet im Rohr 132 und im Verbindungsstück 136. Der Strömungshinweg für das Medium w wird somit durch die Rohre 130, 144 und der Strömungsrückweg wird durch die Rohre 130, 132 gebildet.

Um das äußere Abströmrohr 132 ist unabhängig drehbar die bereits erwähnte Stopfschnecke 6 für den Abfall a innerhalb des unteren Teils der Aufgabeeinrichtung 4 und des Gehäuses 105 angeordnet. Die Stopfschnecke 6 wird durch die elektrische Antriebseinrichtung 5 stufenlos regelbar angetrieben. Für die Stopfschnecke 6 ist dazu ein weiteres Rohr 145 vorgesehen, welches über dem äußeren Abströmrohr 132 nach links gasdicht angeordnet ist. Die Abdichtung gegen Gas ist dabei mit 145a bezeichnet. Auf diese Weise wird erreicht, daß die Umdrehungsgeschwindigkeit der Stopfschnecke 6 abweichend gewählt werden kann von der Umdrehungsgeschwindigkeit der Schweltrommel 8. Da mit letzterer der Rohrkorb 124 kraftschlüssig verbunden ist, dreht sich dieser mit gleicher Drehgeschwindigkeit.

Es ist festzuhalten: Wird die (nicht gezeigte) Antriebseinrichtung des Pyrolysereaktors 8 in Betrieb gesetzt, so dreht sich der Rohrkorb 124 und mit diesem das daran befestigte Zuströmrohr 130 und das Abströmrohr 132. Das innere Wasserdampf-Absaugrohr 140 ist - ebenso wie die stationär gehaltenen Anschlußstücke 134, 136 - ebenfalls nicht drehbar. Mittels der Drehdichtung 143 dreht sich das Rohr 144 auf dem Absaugrohr 140. Das nicht-drehbare Absaugrohr 140 hat den Vorteil, daß die Absaugöffnung an einer beliebigen Stelle im Innenraum 34 angebracht werden kann. Auch dreht sich das Zuströmrohr 130 mit seinem linken Ende im Anschlußstück 134. Schließlich dreht sich auch das linke Ende des Abströmrohrs 132 im ortsfesten Anschlußstück 136. Beim Drehen der Rohre 130, 132 dreht sich der Rohrkorb 124 mitsamt sämtlichen Längsrohren 120, 122, Verbindungsstücken 129 und radialen Rohren 126, 128 mit. Mit anderen Worten: Wenn sich der Pyrolysereaktor 8 um seine Längsachse 10 dreht, dreht sich die Heizvorrichtung 113 für den Abfall-Eingangsteil 114 ebenfalls um die Längsachse 10. Der von der Förderschnecke 6 geförderte Abfall a tritt über die Eintrittsöffnung 108 in den Abfall-Eingangsteil 114 durch die ausreichend großen Zwischenräume 127 zwischen den jeweils benachbarten Rohren 126, 128 (vergleiche Fig. 4) ein. Infolge der Innenauskleidung erfährt der Abfall a hier eine Erwärmung, so daß das in ihm enthaltene Wasser weitgehend verdampft. Der Wasserdampf d wird mittels des Absaugrohrs 140 abgesaugt. Infolge der Drehung der Pyrolysetrommel 8 wird der Abfall a nach rechts weiterbefördert, bis er in weitgehend trockenem Zustand in den Abfall-Ausgangsteil 118 gelangt. Der getrocknete Abfall a wird durch die Flamme 37 des Brenners 36 hier dem eigentlichen (unterstöchiometrischen) Pyrolysevorgang unterzogen, so daß Reststoff r und Schwelgas s entstehen.

Im Abfall-Ausgangsteil 118 der Schweltrommel 8 befinden sich der genannte Schwelgas-Brenner 36 und parallel dazu ein Pilotbrenner 38. Der Schwelgas-Brenner 36 bekommt seine Verbrennungsluft 1 über eine axial angeordnete Lanze oder Leitung 40 zugeführt. Entsprechend erhält der Pilotbrenner 38 seine Verbrennungsluft 1 sowie Brennstoff b über eine Zuleitung 44. Beide Brenner 36, 38 werden achsparallel von einem endseitig geschlossenen Rohr 43 getragen, das am rechten Ende fest mit einem Schwelgas- und Reststoff-Austragsbehälter 14 verbunden ist. Die Leitungen 40, 44 sind am rechten Stirnende des Rohres 43 durch (nicht näher bezeichnete) Dichtungen hindurchgeführt. So kann der Unterdruck im Innenraum des Abfall-Ausgangsteils 118 aufrechterhalten bleiben.

Eine schaufelförmige Austragsvorrichtung 50 ist an der Trommel 8 befestigt; sie dreht sich mit der Trommel 8 um die Längsachse 10. Ein mit spiralförmigen Leiteinrichtungen 156 versehenes Austrittsrohr 51 ist zentral in der ausgangsseitigen Stirnwand der Trommel 8 befestigt. Es sitzt axial über dem Rohr 43 und dreht sich mit der Trommel 8 um deren Längsachse 10. Der im Abfall-Ausgangsteil 118 nach der Pyrolyse zurückbleibende Pyrolyisereststoff r wird über die Schaufel 50, das Innere des Austrittsrohres 51 und dessen Leiteinrichtungen 156 in den Austragsbehälter 14 befördert. Die rechte Seite des Austrittsrohrs 51 bildet dabei die Austrittsöffnung sowohl für das Schwelgas s als auch für den Pyrolysereststoff r. Das Austrittsrohr 51 ist in Abdichtungen 68a,b am Austragsbehälter 14 abgedichtet.

Der dargestellte Pyrolysereaktor 8 läßt sich relativ gedrungen, insbesondere kurz, aufbauen. Zum Abdichten sind zur relativ wenig Dichtungen, insbesondere von ringförmiger Gestalt und von kleinem Durchmesser, erforderlich. Der Pyrolysereaktor 8 beinhaltet die Vorteile der indirekten, aber auch die der direkten Beheizung.

**Patentansprüche**

1. Pyrolysereaktor für eine Anlage zur thermischen Abfallentsorgung, der den Abfall (a) in Schwelgas (s) und im wesentlichen nicht-flüchtigen Pyrolysereststoff (r) umformt, mit einer Eintrittsöffnung (7) für die Zufuhr des Abfalls (a) in den Innenraum (34), mit einer Austrittsöffnung für das Schwelgas (s) und einer Austrittsöffnung für den Pyrolysereststoff (r), und mit einer Heizeinrichtung für den sich im Innenraum (34) befindlichen Abfall (a), **dadurch gekennzeichnet,** daß die Heizeinrichtung einen Brenner (36) umfaßt, der nach Art eines Injektorbrenners aufgebaut ist oder als Mehrflammenbrenner ausgebildet ist und der mit dem Schwelgas (s) und mit Luft (1) speisbar ist und dessen Flamme (37) im Innenraum (34) gelegen ist und daß der Brenner (36) mindestens eine mit dem Innenraum (34) in Verbindung stehende Eintrittsöffnung (60) für das Schwelgas (s) aufweist.

2. Pyrolysereaktor nach Anspruch 1, **dadurch gekennzeichnet,** daß der Brenner (36) trichterförmig ausgebildet ist.

3. Pyrolysereaktor nach einem der Ansprüche 1 oder 2, **dadurch gekennzeichnet,** daß der Brenner (36) an eine Luftzuleitung (40) anschließbar ist, die mit einem Luftgebläse (42) verbunden ist.

4. Pyrolysereaktor nach einem der Ansprüche 1 bis 3, **dadurch gekennzeichnet,** daß dem Brenner (36) ein Zündbrenner (38), ein Pilotbrenner und/oder ein Anfahrbrenner zugeordnet ist.

5. Pyrolysereaktor nach Anspruch 4, **dadurch gekennzeichnet,** daß der Zündbrenner (38), der Pilotbrenner und/oder der Anfahrbrenner in einer Einheit zusammengefaßt sind.

6. Pyrolysereaktor nach einem der Ansprüche 1 bis 5,
**dadurch gekennzeichnet,** daß der Brenner (36) an eine Brennstoffleitung (44) anschließbar ist und damit gleichzeitig als Anfahrbrenner dient.

7. Pyrolysereaktor nach einem der Ansprüche 1 bis 6,
**dadurch gekennzeichnet,** daß im Innenraum (34) ein Schutzschirm (62) angeordnet ist, der die Strahlung der Flamme (37) in Richtung auf das im Innenraum (34) befindliche Schwelgut (a) reduziert.

8. Pyrolysereaktor nach einem der Ansprüche 1 bis 7,
**dadurch gekennzeichnet,** daß die Austrittsöffnungen (48) für das Schwelgas (g) und den Pyrolysereststoff (r) ebenfalls an dem Ende des Pyrolysereaktors angeordnet sind, an dem sich der Brenner (36) befindet.

9. Pyrolysereaktor nach einem der Ansprüche 1 bis 8,
**dadurch gekennzeichnet,** daß der Pyrolysereaktor als Trommel (8) ausgebildet ist und daß die Trommel (8) um ihre Hauptachse (10) drehbar ist, während der Brenner (36) raumfest angeordnet ist.

10. Pyrolysereaktor nach einem der Ansprüche 1 bis 9,
**dadurch gekennzeichnet,** daß er innen eine Ausmauerung (30) besitzt und die Außenwand (28) bevorzugt mit einer Isolierung (32) versehen ist.

11. Pyrolysereaktor nach einem der Ansprüche 1 bis 10,
**dadurch gekennzeichnet,** daß der Brenner (36) austauschbar, insbesondere gegen einen Anfahrbrenner, angeordnet ist.

12. Pyrolysereaktor nach einem der Ansprüche 1 bis 11, **gekennzeichnet** durch seine Verwendung in einer an sich bekannten Abfall-Entsorgungsanlage nach dem Schwel-Brenn-Verfahren.

13. Pyrolysereaktor nach einem der Ansprüche 1 bis 12, **dadurch gekennzeichnet,** daß die Heizeinrichtung mehrere Brenner (87a, 88a, 89a) umfaßt, die mit Luft (1) und mit dem Schwelgas (s) aus dem Innenraum (34) speisbar und deren Flammen im Innenraum (34) gelegen sind, und daß die Luftzufuhr mindestens eines Brenners (87a, 88a, 89a) einstellbar ist.

14. Pyrolysereaktor nach einem der Ansprüche 1 bis 13, **dadurch gekennzeichnet,** daß im Innenraum (34), insbesondere am einen Ende des Innenraumes (34), eine Mahlzone (71) vorgesehen ist, die insbesondere durch eine Trennwand (72) begrenzt ist, und in der der pyrolysierte Abfall (a) zerkleinerbar ist.

15. Pyrolysereaktor nach Anspruch 14, **dadurch gekennzeichnet,** daß er als drehbare Trommel (8) ausgebildet ist, und daß in der Mahlzone (71) Mahlkörper (93), insbesondere runde Metallkörper von erheblichem Gewicht,untergebracht sind, die bei Drehung der Trommel (8) den Abfall (a) zerkleinern.

16. Pyrolysereaktor nach einem der Ansprüche 1 bis 15, **dadurch gekennzeichnet,** daß an die Austrittsöffnung (81) für den Pyrolysereststoff (r) ein Reststoffaustragsgehäuse (74) anschließt, in dem ein Sieb (94) angeordnet ist.

17. Pyrolysereaktor nach Anspruch 16, **dadurch gekennzeichnet,** daß er als drehbare Trommel (8) ausgebildet ist, und daß das Sieb (94) ein mit der Trommel (8) mitdrehbarer Siebkörper, vorzugsweise von zylindrischer Gestalt, ist.

18. Pyrolysereaktor nach einem der Ansprüche 13 bis 17, **dadurch gekennzeichnet,** daß die Brenner (87a, 88a, 89a) durch Lochrohre (87, 88, 89) gebildet sind, die an Luftzuleitungen anschließbar sind, wobei vorzugsweise in die Öffnungen der Lochrohre (87, 88, 89) Brennerdüsen eingesetzt sind.

19. Pyrolysereaktor nach Anspruch 18, **dadurch gekennzeichnet,** daß die Lochrohre (87, 88, 89) unterschiedlich lang und ortsfest nahe seiner Innenwand angeordnet sind.

20. Pyrolysereaktor nach Anspruch 18 oder 19, **dadurch gekennzeichnet,** daß die Luftzufuhr zu jedem Lochrohr (87, 88, 89) getrennt steuerbar ist, vorzugsweise über Drosselventile (90, 91, 92).

21. Pyrolysereaktor nach einem der Ansprüche 13 bis 20,
**dadurch gekennzeichnet,** daß zur Speisung der Brenner (87a, 88a, 89a) vorgewärmte Luft (1) vorgesehen ist.

22. Pyrolysereaktor nach einem der Ansprüche 1 bis 21,
**dadurch gekennzeichnet,**
daß die Heizeinrichtung eine Heizvorrichtung (113) für den Abfall-Eingangsteil (114) und den Brenner (36) für den Abfall-Ausgangsteil (118) umfaßt, wobei der Brenner (36) mit dem Schwelgas (s) speisbar ist und im Betrieb eine im Innenraum (34) gelegene Flamme (37) aufweist.

23. Pyrolysereaktor nach Anspruch 22, **dadurch gekennzeichnet,** daß die Heizvorrichtung (113) am Abfall-Eingangsteil (114) eine Auskleidung umfaßt, wobei die Auskleidung durch ein Wärmeträgermedium (w) heizbar ist

24. Pyrolysereaktor nach Anspruch 23, **dadurch gekennzeichnet,** daß die Auskleidung becherförmig ausgebildet ist sowie ein zylindrisches Auskleidungsteil und ein daran befestigtes Stirnteil umfaßt, wobei der Raum zwischen der Außenwand einerseits und dem Auskleidungs- und Stirnteil andererseits vom Wärmeträgermedium durchströmbar ist.

25. Pyrolysereaktor nach Anspruch 23, **dadurch gekennzeichnet,** daß die Auskleidung (20, 22) durch einen Rohrkorb (124) gebildet ist, der insbesondere eine Anzahl von parallelen Rohren (120, 122) für das hin- und rückströmende Wärmeträgermedium (w) besitzt, der insbesondere schaufelartig ausgebildet ist, und der vom Wärmeträgermedium (w) durchströmbar ist.

26. Pyrolysereaktor nach Anspruch 25, **dadurch gekennzeichnet,** daß der Rohrkorb (124) eine erste Anzahl radial ausgerichteter erster Rohre (126), die gemeinsam an ein Zuströmrohr (130) angeschlossen sind, und eine zweite Anzahl radial ausgerichteter zweiter Rohre (128), die gemeinsam an ein Abströmrohr (132) angeschlossen sind, besitzt, wobei das Zuströmrohr (130) und das Abströmrohr (132) für das Wärmeträgermedium (w) insbesondere axial zueinander angeordnet sind.

27. Pyrolysereaktor nach einem der Ansprüche 22 bis 26, **dadurch gekennzeichnet,** daß eine Vorrichtung zum Absaugen des im Abfall-Eingangsteil (114) entstehenden Wasserdampfes (d) vorgesehen ist.

28. Pyrolysereaktor nach Anspruch 26 und 27, **dadurch gekennzeichnet,** daß axial zum Zuströmrohr (130) und zum Abströmrohr (132) ein Wasserdampf-Absaugrohr (140) liegt, das vorzugsweise an seinem im Innenraum (34) befindlichen Ende einen Trichter (142) trägt.

29. Pyrolysereaktor nach einem der Ansprüche 22 bis 28, der um seine Längsachse (10) drehbar ist, **dadurch gekennzeichnet,** daß die Heizvorrichtung (113) für den Abfall-Eingangsteil (114) ebenfalls um die Längsachse (10) mit gleicher Drehzahl drehbar ist.

30. Pyrolysereaktor nach Anspruch 29 und einem der Ansprüche 26 bis 28, **dadurch gekennzeichnet,** daß das Zuströmrohr (130) und das Abströmrohr (132) um ihre Längsachse drehbar sind.

31. Pyrolysereaktor nach einem der Ansprüche 22 bis 30, **dadurch gekennzeichnet,** daß in den Abfall-Eingangsteil (114) eine Stopfschnecke (6) führt, die insbesondere auf einem Rohr befestigt ist, z. B. auf einem Zuströmrohr (130) für das Wärmeträgermedium (w), einem Abströmrohr (132) für das Wärmeträgermedium (w) oder einem gesondert vorgesehenen Rohr (145).

32. Pyrolysereaktor nach einem der Ansprüche 23 bis 31, **dadurch gekennzeichnet,** daß als Wärmeträgermedium (w) Thermoöl, Heißwasser, Sattdampf oder ein Dampf-Wasser-Gemisch vorgesehen ist.

33. Pyrolysereaktor nach einem der Ansprüche 22 bis 32, **dadurch gekennzeichnet,** daß zum Austragen des Pyrolysereststoffes (r) mindestens eine drehbare Schaufel (50) vorgesehen ist.

## Claims

1. Pyrolysis reactor for an installation for thermal waste disposal, which converts the waste (a) into carbonization gas (s) and substantially non-volatile pyrolysis residue (r), having an inlet opening (7) for the supply of the waste (a) into the interior (34), having an outlet opening for the carbonization gas (s) and an outlet opening for the pyrolysis residue (r), and having a heating device for the waste (a) located in the interior (34), **characterized in that**
the heating device comprises a burner (36) which is constructed like an injector burner or is formed as a multi-flame burner and which can be supplied with the carbonization gas (s) and with air (1) and the flame (37) of which is placed in the interior (34) and that the burner (36) has at least one inlet opening (60) for the carbonization gas (s), connected to the interior (34).

2. Pyrolysis reactor according to claim 1,
**characterized in that** the burner (36) is formed in the shape of a funnel.

3. Pyrolysis reactor according to one of claims 1 or 2, **characterized in that** the burner (36) can be attached to an air supply line (40) which is connected to an air blower (42).

4. Pyrolysis reactor according to one of claims 1 to 3, **characterized in that** an ignition burner (38), a pilot burner and/or a starting burner is associated with the burner (36).

5. Pyrolysis reactor according to claim 4, **characterized in that** the ignition burner (38), the pilot burner and/or the starting burner are combined into one unit.

6. Pyrolysis reactor according to one of claims 1 to 5,
**characterized in that** the burner (36) can be attached to a fuel line (44) and thereby simultaneously serves as a starting burner.

7. pyrolysis reactor according to one of claims 1 to 6,

**characterized in that** a protective screen (62) is arranged in the interior (34), the screen reducing the radiation of the flame (37) in the direction of the carbonization material (a) located in the interior (34).

8. Pyrolysis reactor according to one of claims 1 to 7,
**characterized in that** the outlet openings (48) for the carbonization gas (g) and the pyrolysis residue (r) are likewise arranged at that end of the pyrolysis reactor at which the burner (36) is located.

9. Pyrolysis reactor according to one of claims 1 to 8,
**characterized in that** the pyrolysis reactor is formed as a drum (8) and that the drum (8) can be rotated about its main axis (10), while the burner (36) is arranged in a space-tight manner.

10. Pyrolysis reactor according to one of claims 1 to 9,
**characterized in that** on the inside it has a brick lining (30) and the outer wall (28) is preferably provided with an insulation (32).

11. Pyrolysis reactor according to one of claims 1 to 10,
**characterized in that** the burner (36) is arranged so that it can be exchanged, in particular for a starting burner.

12. Pyrolysis reactor according to one of claims 1 to 11, **characterized** by its use in a waste disposal installation known per se according to the carbonization burning process.

13. Pyrolysis reactor according to one of claims 1 to 12, **characterized in that** the heating device comprises several burners (87a, 88a, 89a), which can be supplied with air (1) and with the carbonization gas (s) from the interior (34) and the flames of which are placed in the interior (34), and that the air supply of at least one burner (87a, 88a, 89a) can be adjusted.

14. Pyrolysis reactor according to one of claims 1 to 13, **characterized in that** in the interior (34), in particular at one end of the interior (34), a grinding region (71) is provided, which is limited in particular by a separating wall (72), and in which the pyrolysed waste (a) can be crushed.

15. Pyrolysis reactor according to claim 14, **characterized in that** it is formed as a rotatable drum (8) and that in the grinding region (71) grinding bodies (93), in particular round metal bodies of considerable weight, are accommodated, which crush the waste (a) when the drum (8) rotates.

16. Pyrolysis reactor according to one of claims 1 to 15, **characterized in that** a residue discharge housing (74) is attached to the outlet opening (81) for the pyrolysis residue (r), in which housing a filter (94) is arranged.

17. Pyrolysis reactor according to claim 16, **characterized in that** it is formed as a rotatable drum (8), and that the filter (94) is a filter body, preferably cylindrical, which can be rotated with the drum (8).

18. Pyrolysis reactor according to one of claims 13 to 17,
**characterized in that** the burners (87a, 88a, 89a) are formed by perforated pipes (87, 88, 89) which can be attached to air supply lines, whereby burner nozzles are preferably inserted into the openings of the perforated pipes (87, 88, 89).

19. Pyrolysis reactor according to claim 18, **characterized in that** the perforated pipes (87, 88, 89) are of differing lengths and are arranged in a fixed manner next to its inner wall.

20. Pyrolysis reactor according to claim 18 or 19, **characterized in that** the air supply to each perforated pipe (87, 88, 89) can be controlled separately, preferably via throttle valves (90, 91, 92).

21. Pyrolysis reactor according to one of claims 13 to 20,
**characterized in that** to supply the burners (87a, 88a, 89a) preheated air (1) is provided.

22. Pyrolysis reactor according to one of claims 1 to 21,
**characterized in that** the heating device comprises a heating appliance (113) for the waste input part (114) and the burner (36) for the waste output part (118), whereby the burner (36) can be supplied with the carbonization gas (s) and in operation has a flame (37) placed in the interior (34).

23. Pyrolysis reactor according to claim 22, **characterized in that** the heating appliance (113) on the waste input part (114) includes a coating, whereby the coating can be heated by a heat carrier medium (w).

24. Pyrolysis reactor according to claim 23, **characterized in that** the coating is formed in a cup-shaped manner and also comprises a cylindrical coating part and a front part fastened thereto, whereby the heat carrier medium can flow through the space between the outer wall on the one side and the coating part and front part on the other side.

25. Pyrolysis reactor according to claim 23, **characterized in that** the coating (20, 22) is formed by a pipe basket (124) which has in particular a number of parallel pipes (120, 122) for the heat carrier medium (w) flowing to and fro, which is formed in particular like a shovel and through which the heat carrier medium (w) can flow.

26. Pyrolysis reactor according to claim 25, **characterized in that** the pipe basket (124) has a first number of radially aligned first pipes (126) which are attached together to an inflow pipe (130) and a second number of radially aligned second pipes (128) which are attached together to an outflow pipe (132), whereby the inflow pipe (130) and the outflow pipe (132) for the heat carrier medium (w) are arranged in particular axially to one another.

27. Pyrolysis reactor according to one of claims 22 to 26, **characterized in that** an appliance is provided for drawing off the water vapour (d) arising in the waste input part (114).

28. Pyrolysis reactor according to claim 26 and 27, **characterized in that** a water-vapour drawing-off pipe (140) lies axially to the inflow pipe (130) and to the outflow pipe (132), the drawing-off pipe preferably carrying a funnel (142) at the end located in the interior (34).

29. Pyrolysis reactor according to one of claims 22 to 28, which can be rotated about its longitudinal axis (10), **characterized in that** the heating appliance (113) for the waste input part (114) can likewise be rotated about the longitudinal axis (10) at the same speed.

30. Pyrolysis reactor according to claim 29 and one of claims 26 to 28, **characterized in that** the inflow pipe (130) and the outflow pipe (132) can be rotated about their longitudinal axis.

31. Pyrolysis reactor according to one of claims 22 to 30, **characterized in that** a stopping screw (6) leads into the waste input part (114), the stopping screw being fastened in particular to a pipe, for example to an inflow pipe (130) for the heat carrier medium (w), an outflow pipe (132) for the heat carrier medium (w) or a separately provided pipe (145).

32. Pyrolysis reactor according to one of claims 23 to 31, **characterized in that** as heat carrier medium (w) there is provided thermal oil, hot water, saturated steam or a mixture of steam and water.

33. Pyrolysis reactor according to one of claims 22 to 32, **characterized** in that to discharge the pyrolysis residue (r) at least one rotatable shovel (50) is provided.


## Revendications

1. Réacteur de pyrolyse pour une installation d'élimination thermique de déchets, qui transforme les déchets (a) en gaz de distillation (s), et en résidu de pyrolyse (r) sensiblement non volatil, comprenant une ouverture d'entrée (7) pour amener les déchets (a) à l'intérieur (34), une ouverture de sortie pour le gaz de distillation (s) et une ouverture de sortie pour le résidu de pyrolyse (r), et un dispositif de chauffage pour le déchet (a) se trouvant dans la chambre intérieure (34), **caractérisé en ce que** le dispositif de chauffage comporte un brûleur (36) qui est formé à la manière d'un brûleur à injecteur ou qui est constitué sous la forme d'un brûleur à plusieurs flammes, et qui peut être alimenté en le gaz de distillation (s) et en air (1), et dont la flamme (37) s'étend dans la chambre intérieure (34), et en ce que le brûleur (36) comporte au moins une ouverture d'entrée (60) pour le gaz de distillation (s), qui communique avec l'intérieur (34).

2. Réacteur de pyrolyse suivant la revendication 1, **caractérisé en ce que** le brûleur (36) est en forme d'entonnoir.

3. Réacteur de pyrolyse suivant l'une des revendications 1 ou 2, **caractérisé en ce que** le brûleur (36) peut être raccordé à un conduit d'amenée d'air (40), qui communique avec un ventilateur (42) pour de l'air.

4. Réacteur de pyrolyse suivant l'une des revendications 1 à 3, **caractérisé en ce qu**'au brûleur (36) est associé un brûleur d'allumage (38), un brûleur-pilote et/ou un brûleur de démarrage.

5. Réacteur de pyrolyse suivant la revendication 4, **caractérisé en ce que** le brûleur d'allumage (38), le brûleur-pilote et/ou le brûleur de démarrage sont réunis en une unité.

6. Réacteur de pyrolyse suivant l'une des revendications 1 à 5, **caractérisé en ce que** le brûleur (36) peut être raccordé à un conduit (44) pour du combustible et servir ainsi, en même temps, de brûleur de démarrage.

7. Réacteur de pyrolyse suivant l'une des revendications 1 à 6, **caractérisé en ce que** dans la chambre intérieure (34) est disposé un écran de protection (62), qui réduit le rayonnement de la flamme (37) en direction du produit distillé (a) se trouvant dans la chambre intérieure (34).

8. Réacteur de pyrolyse suivant l'une des revendications 1 à 7, **caractérisé en ce que** les ouvertures de sortie (48) pour le gaz de distillation (g) et pour le résidu de pyrolyse (r) sont disposées également à l'extrémité du réacteur de pyrolyse, où se trouve le brûleur (36).

9. Réacteur de pyrolyse suivant l'une des revendications 1 à 8, **caractérisé en ce que** le réacteur de pyrolyse est constitué en tambour (8), et en ce que le tambour (8) peut tourner autour de son axe principal (10), tandis que le brûleur (36) est monté fixe.

10. Réacteur de pyrolyse suivant l'une des revendications 1 à 9, **caractérisé en ce qu**'il possède, à l'intérieur, un garnissage (30) et la paroi extérieure (28) est munie, de préférence, d'une isolation (32).

11. Réacteur de pyrolyse suivant l'une des revendications 1 à 10, **caractérisé en ce que** le brûleur (36) est monté de manière à pouvoir être remplacé, notamment par un brûleur de démarrage.

12. Réacteur de pyrolyse suivant l'une des revendications 1 à 11, **caractérisé** par son utilisation dans une installation d'élimination des déchets en soi connue, par le procédé de distillation-combustion.

13. Réacteur de pyrolyse suivant l'une des revendications 1 à 12, **caractérisé en ce que** le dispositif de chauffage comporte plusieurs brûleurs (87a, 88a, 89a) qui peuvent être alimentés en air (1) et en gaz de distillation (s) à partir de la chambre intérieure (34) et dont les flammes s'étendent dans celle-ci, et en ce que l'amenée d'air d'au moins l'un des brûleurs (87a, 88a, 89a) est réglable.

14. Réacteur de pyrolyse suivant l'une des revendications 1 à 13, **caractérisé en ce qu'**il est prévu, dans la chambre intérieure (34), notamment à une extrémité de celle-ci, une zone de broyage (71), qui est délimitée notamment par une cloison (72) et dans laquelle les déchets (a) pyrolysés peuvent être fragmentés.

15. Réacteur de pyrolyse suivant la revendication 14, **caractérisé en ce qu'**il est constitué en tambour (8) tournant et en ce que, dans la zone de broyage (71), sont logés des corps de broyage (93), notamment des corps métalliques sphériques de poids considérable, qui fragmentent les déchets (a) lors de la rotation du tambour (8).

16. Réacteur de pyrolyse suivant l'une des revendications 1 à 15, **caractérisé en ce qu'**à l'ouverture de sortie (81) du résidu de pyrolyse (r) se raccorde un caisson (74) d'évacuation du résidu, dans lequel est monté un crible (94).

17. Réacteur de pyrolyse suivant la revendication 16, **caractérisé en ce qu'**il est constitué en tambour (8) tournant et en ce que le crible (94) est un corps de criblage solidaire en rotation du tambour (8) et, de préférence, de forme cylindrique.

18. Réacteur de pyrolyse suivant l'une des revendications 13 à 17, **caractérisé en ce que** les brûleurs (87a, 88a, 89a) sont formés de tubes perforés (87, 88, 89), qui peuvent être raccordés à des conduits d'amenée d'air, des buses de brûleurs étant montées de préférence dans les perforations des tubes perforés (87, 88, 89).

19. Réacteur de pyrolyse suivant la revendication 18, **caractérisé en ce que** les tubes perforés (87, 88, 89) ont des longueurs différentes et sont montés fixes, à proximité de sa paroi intérieure.

20. Réacteur de pyrolyse suivant la revendication 18 ou 19, **caractérisé en ce que** l'amenée d'air, à chaque tube perforé (87, 88, 89), peut être commandée de manière indépendante, de préférence par des vannes d'étranglement (90, 91, 92).

21. Réacteur de pyrolyse suivant l'une des revendications 13 à 20, **caractérisé en ce qu'**il est prévu, pour l'alimentation des brûleurs (87a, 88a, 89a), de l'air (1) préchauffé.

22. Réacteur de pyrolyse suivant l'une des revendications 1 à 21, **caractérisé en ce que** le dispositif de chauffage comprend un appareil de chauffage (113) de la partie d'entrée (114) des déchets et le brûleur (36) pour la partie de sortie (118) des déchets, le brûleur (36) pouvant être alimenté en gaz de distillation (s) et présentant, en fonctionnement, une flamme (37) s'étendant dans la chambre intérieure (34).

23. Réacteur de pyrolyse suivant la revendication 22, **caractérisé en ce que** l'appareil de chauffage (113) à la partie d'entrée (114) des déchets comporte un revêtement, le revêtement pouvant être chauffé par un milieu caloporteur (w).

24. Réacteur de pyrolyse suivant la revendication 23, **caractérisé en ce que** le revêtement est constitué en forme de cuvette et comporte une partie de revêtement cylindrique et une partie frontale qui y est fixée, le milieu caloporteur pouvant s'écouler dans l'espace compris entre la paroi extérieure, d'une part, et la partie de revêtement et la partie frontale, d'autre part.

25. Réacteur de pyrolyse suivant la revendication 23, **caractérisé en ce que** le revêtement (20, 22) est formé d'un panier à tubes (124) qui possède notamment un certain nombre de tubes (120, 122) parallèles, pour l'entrée et la sortie du milieu caloporteur (w), ce panier étant notamment en forme d'aube et le milieu caloporteur (w) pouvant s'y écouler.

26. Réacteur de pyrolyse suivant la revendication 25, **caractérisé en ce que** le panier à tubes (124) possède un premier nombre de premiers tubes (126) dirigés radialement qui sont raccordés en commun à un tube d'entrée (130) et un second nombre de seconds tubes (128) dirigés radialement qui sont raccordés en commun à un tube de sortie (132), le tube d'entrée (130) et le tube de sortie (132), destinés au milieu caloporteur (w), étant disposés notamment axialement l'un par rapport à l'autre.

27. Réacteur de pyrolyse suivant l'une des revendications 22 à 26, **caractérisé en ce qu'**il est prévu un dispositif d'aspiration de la vapeur d'eau (d) se formant dans la partie d'entrée (114) des déchets.

28. Réacteur de pyrolyse suivant la revendication 26 ou 27, **caractérisé en ce qu'**il est prévu, axialement par rapport au tube d'entrée (130) et au tube de sortie (132), un tube d'aspiration (140) de la vapeur d'eau qui, porte un entonnoir (52), de préférence à son extrémité se trouvant dans la chambre intérieure (34).

29. Réacteur de pyrolyse suivant l'une des revendications 22 à 28, qui est monté tournant autour de son axe longitudinal (10), **caractérisé en ce que** l'appareil de chauffage (113) de la partie d'entrée (114) des déchets est également monté tournant autour de l'axe longitudinal (10), à la même vitesse de rotation.

**14**

30. Réacteur de pyrolyse suivant la revendication 29 ou l'une des revendications 26 à 28, **caractérisé en ce que** le conduit d'entrée (130) et le conduit de sortie (132) sont montés tournants autour de leur axe longitudinal.

31. Réacteur de pyrolyse suivant l'une des revendications 22 à 30, **caractérisé en ce que**, dans la partie d'entrée (114) des déchets, passe une vis de gavage (6) qui est fixée notamment à un tube, par exemple à un tube d'entrée (130) du milieu caloporteur (w), à un tube de sortie (132) du milieu caloporteur (w) ou à un tube (145) prévu à part.

32. Réacteur de pyrolyse suivant l'une des revendications 23 à 31, **caractérisé en ce qu**'il est prévu, comme milieu caloporteur (w), de l'huile stable thermiquement, de la vapeur d'eau, de la vapeur saturée ou un mélange de vapeur et d'eau.

33. Réacteur de pyrolyse suivant l'une des revendications 22 à 32, **caractérisé en ce qu**'il est prévu, pour évacuer le résidu de pyrolyse (r), au moins une palette (50) tournante.

FIG 1

EP 0 360 052 B1

FIG 2

EP 0 360 052 B1

FIG 3A

FIG 3B

FIG 3A

FIG 4

FIG 3B

EP 0 360 052 B1